# DEMANDE DE BREVET EUROPEEN

(11) **EP 1 159 864 A1**
(43) Date de publication de la demande: **05.12.2001**
(21) Numéro de dépôt: 01401402.1
(22) Date de dépôt: 29.05.2001
(51) Int. Cl.: A01B 75/00

(54) **Engin automoteur notamment pour opérations de traitement et d'entretien de cultures**

(30) Priorité: 30.05.2000 FR 0006907
(71) Demandeur: Humco, Saint Just, 49110 Saint Pierre Montlimart (FR)
(72) Inventeur: Humeau, Michel, 49110 Saint Pierre Montlimart (FR); Couillaud, Michel, 44330 La Regrippiere (FR)
(74) Mandataire: Dawidowicz, Armand

(57) **Abrégé**

L'invention concerne un engin automoteur destiné à pour faciliter les opérations de traitement et d'entretien de cultures organisées en particulier en rangs du type comprenant, monté sur roues (3, 4), un châssis (1) portant un siège (5).

Cet engin est caractérisé en ce que ce châssis (1) est du type brisé pour pouvoir occuper au moins deux positions, l'une, dite basse, voisine du sol pour amener l'assise du siège (5) au ras du sol, l'autre, dite haute, éloignée du sol soit pour franchir un obstacle de dénivellation du sol, soit pour travailler à un niveau éloigné du sol, la position basse voisine du sol étant obtenue par le poids de l'utilisateur sur l'assise du siège (5), le soulagement de ce poids ramenant le châssis en position initiale haute.

Application : engin pour l'entretien des vignes.

## Description

La présente invention concerne un engin automoteur, destiné notamment à faciliter les opérations de traitement et d'entretien de cultures organisées en particulier en rangs telles que les vignes.

De nombreux engins, appelés encore chariots ou véhicules, ont été développés à ce jour pour faciliter des travaux de culture, en particulier dans le domaine viticole. Tel est le cas des engins automoteurs décrits dans le brevet US-A-3.910.368, FR-A-2.686.767 ou FR-A-2.358.817. Ces engins sont constitués de manière générale d'un châssis monté sur roues, ce châssis portant au moins un siège. Tous ces engins ont pour inconvénient principal de positionner le conducteur à une hauteur relativement importante par rapport au sol. Il en résulte que certains travaux en bas de souche, tels que l'ébourgeonnage, qui demandent à l'opérateur d'être positionné au ras du sol, ne peuvent être effectués par ce type d'engin. Un autre véhicule, décrit dans le brevet FR-A-2.255.834, est muni d'un châssis réglable en hauteur par l'intermédiaire de vis. Le réglage de ce châssis ne permet pas toutefois au châssis de présenter une garde au sol inférieure à celle atteinte par l'axe des roues. Par ailleurs, en cas d'obstacles, en particulier d'obstacles de dénivellation du sol, il est nécessaire pour le conducteur de descendre de son engin et d'agir sur le dispositif de réglage pour permettre le passage de l'obstacle.

Un but de la présente invention est de proposer un engin automoteur, en particulier pour la réalisation d'opérations d'ébourgeonnage dans les vignes, dont la garde au sol peut être réduite notamment à moins de trois centimètres du sol tout en permettant un franchissement aisé d'obstacles, en particulier d'obstacles de dénivellation du sol sans que l'utilisateur ait à quitter son siège.

Un autre but de la présente invention est de proposer un engin automoteur dont la conception permet une manoeuvre et une commande à l'avancement aisées dudit engin sans nuire au confort du conducteur.

Un autre but de la présente invention est de proposer un engin automoteur polyvalent dont la conception permet d'utiliser indifféremment cet engin automoteur comme engin pour la réalisation d'opérations dans lesquelles le conducteur est assis face au rang à travailler et a accès à la partie haute du rang ou d'opérations dans lesquelles l'opérateur fait face à la route délimitée par deux rangs de travail et se trouve sensiblement au ras du sol.

A cet effet, l'invention a pour objet un engin automoteur destiné notamment à faciliter les opérations de traitement et d'entretien de cultures organisées en particulier en rangs telles que les vignes, du type comprenant, monté sur roues, un châssis portant un siège, caractérisé en ce que ce châssis est du type brisé pour pouvoir occuper au moins deux positions, l'une, dite basse, voisine du sol pour amener l'assise du siège au ras du sol, l'autre, dite haute, éloignée du sol soit pour franchir un obstacle de dénivellation du sol, soit pour travailler à un niveau éloigné du sol, la position basse voisine du sol étant obtenue par le poids de l'utilisateur sur l'assise du siège, le soulagement de ce poids ramenant le châssis en position initiale haute.

Grâce à cette conception de l'engin automoteur, l'utilisateur peut à volonté occuper une position de travail basse généralement réglable, une position de travail haute et déplacer l'engin y compris à l'encontre d'un obstacle sans quitter l'assise du siège. Par ailleurs, cette conception brisée du châssis permet de réduire l'encombrement du point bas dudit châssis.

Selon une forme de réalisation préférée de l'invention, le châssis comporte au moins deux sections, dites respectivement avant et arrière, reliées entre elles par une articulation disposée de préférence perpendiculairement à l'axe longitudinal de l'engin et au voisinage de l'assise du siège, lesdites sections étant animées d'un mouvement relatif par rapport aux axes de roues respectivement avant et arrière pour se déplacer entre une position haute dans laquelle les sections du châssis sont alignées et une position basse dans laquelle elles forment un angle α dièdre prédéterminé de préférence réglable. De préférence, l'engin comporte un organe réglable de limitation de la mobilité de l'articulation pour permettre au châssis et par suite à l'assise du siège d'occuper une position basse prédéterminée par l'utilisateur.

L'invention sera bien comprise à la lecture de la description suivante d'exemples de réalisation, en référence aux dessins annexés dans lesquels :
la figure 1 représente une vue schématique de profil d'un engin automoteur conforme à l'invention en position haute du châssis ;
la figure 2 représente une vue schématique en coupe d'un engin conforme à l'invention en position base du châssis ;

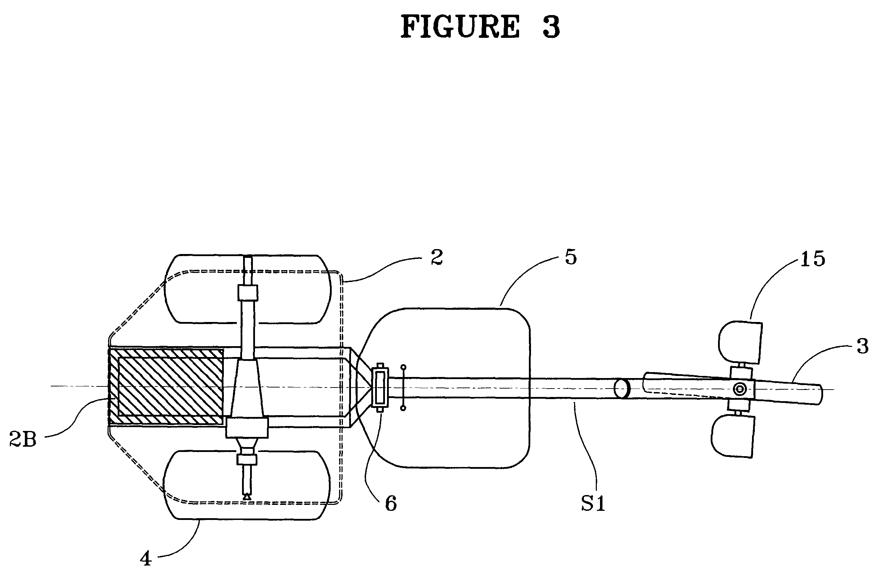

la figure 3 représente une vue schématique de dessus du châssis de la figure 1 ;

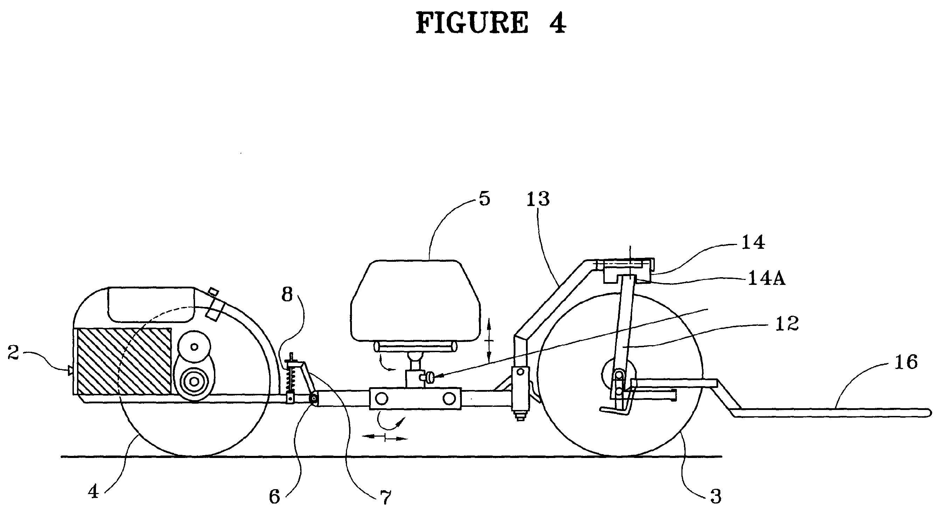

la figure 4 représente une vue schématique en coupe de l'engin en position face au rang à travailler du siège et
les figures 5 et 6 représentent une vue schématique de détail de l'articulation du châssis et de ses moyens de rappel respectivement en position basse et haute du châssis.

Comme mentionné ci-dessus, l'engin automoteur, objet de l'invention, est plus particulièrement destiné à faciliter les opérations de traitement et d'entretien de cultures organisées en particulier en rangs telles que les vignes. Un tel engin polyvalent permet ainsi la réalisation d'opérations telles que le taillage, le tirage des sarments, l'attachage, l'ébourgeonnage, l'éclaircissage, le retrait d'entre-coeur, la vendange en vert, etc.

Cet engin automoteur est constitué, de manière générale, d'un châssis 1 portant un siège 5, ce châssis 1 étant monté sur des roues respectivement avant et arrière représentées en 3 et 4. Un groupe motopropulseur 2 est généralement placé à l'arrière de l'engin.

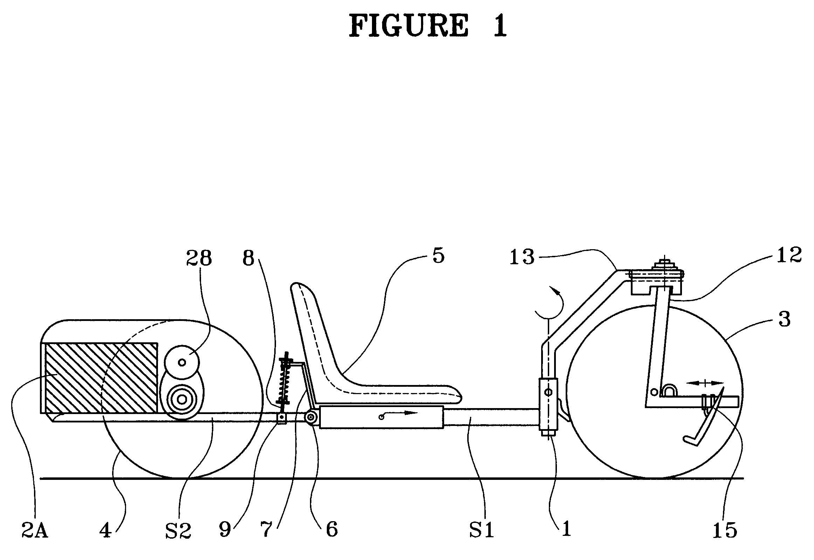

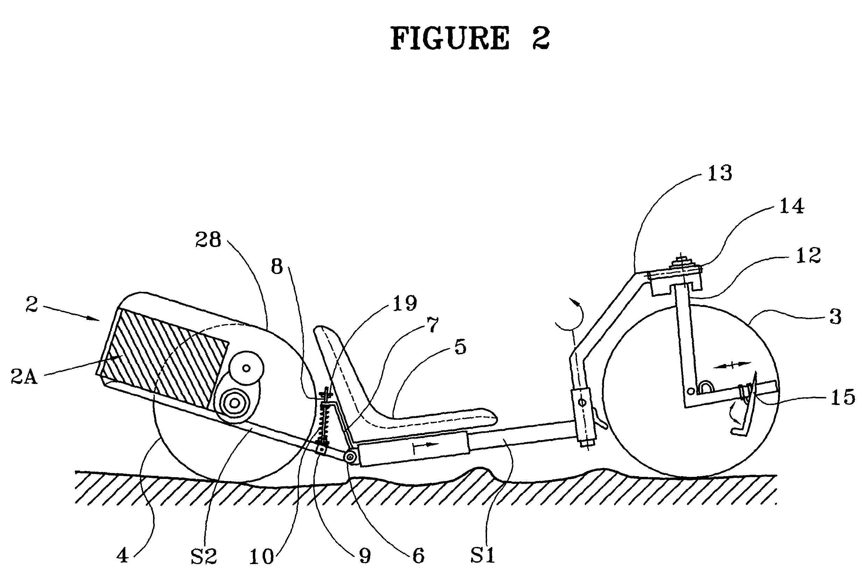

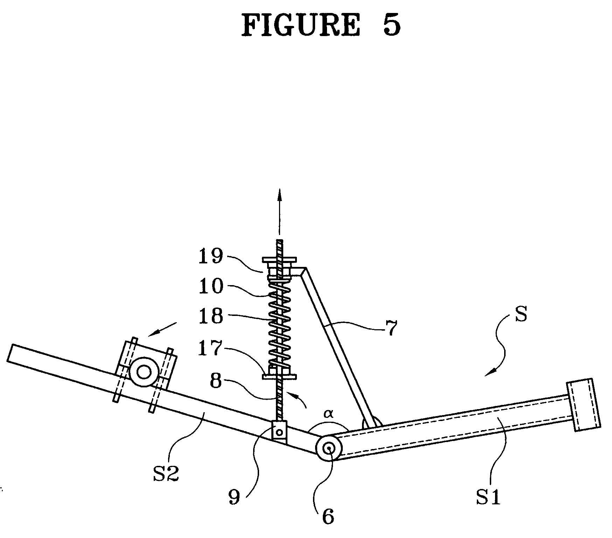

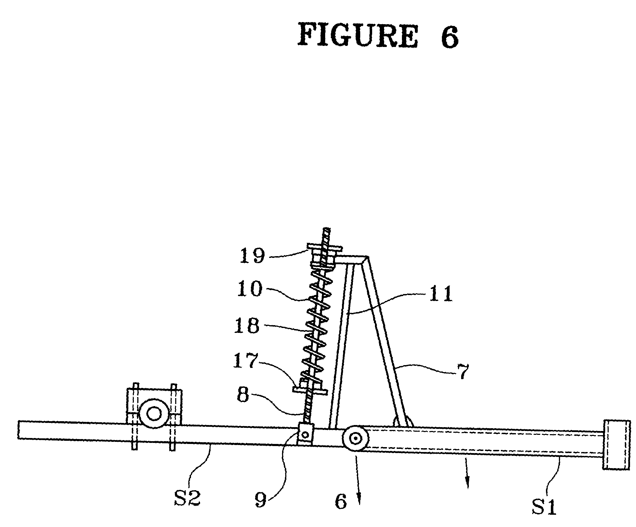

De manière caractéristique à l'invention, ce châssis 1 est du type brisé. En d'autres termes, ce châssis comporte au moins deux sections S1, S2, dites respectivement avant et arrière, reliées entre elles par une articulation 6 disposée de préférence perpendiculairement à l'axe longitudinal de l'engin et au voisinage de l'assise du siège 5. Ces sections S1 et S2 sont animées d'un mouvement relatif par rapport aux axes de roues 3, 4 et peuvent se déplacer entre une position haute (figures 1 et 6) dans laquelle les sections S1, S2 du châssis sont alignées et une position basse (figures 2 et 5), correspondant à une position dans laquelle par exemple on pratique l'ébourgeonnage, dans laquelle les sections S1, S2 forment entre elles un angle α dièdre prédéterminé de préférence réglable. Cet angle α est un angle ouvert généralement proche de l'ordre de 160 degrés. Le réglage de l'angle α permet donc à l'utilisateur d'occuper n'importe quelle position intermédiaire entre deux positions haute et basse extrêmes.

Au cours du passage du châssis 1 de la position haute à la position basse, passage obtenu par le poids de l'utilisateur sur l'assise du siège 5, en position assise, l'abaissement de l'assise du siège 5 est tel que l'opérateur peut se trouver à moins de trois centimètres du sol. Il peut travailler sur le pied des cultures sans fatigue puisqu'il n'a plus à se baisser ou à se pencher pour y accéder.

Bien que, sur la base de la définition ci-dessus, le châssis 1 puisse affecter un grand nombre de formes, dans un mode de réalisation préféré de l'invention, ce châssis 1 est constitué d'au moins deux longerons reliés entre eux par une traverse, chaque longeron comportant une articulation 6 disposée perpendiculairement à l'axe longitudinal de l'engin. Les sections de longeron, situées de part et d'autre d'une articulation 6, sont animées d'un mouvement relatif par rapport aux axes de roues 3, 4 respectivement avant et arrière pour se déplacer entre une position haute et une position basse décrites ci-dessus. Les sections de chaque longeron du châssis 1 sont alignées en position haute et forment un angle α en position basse. De manière analogue, le châssis aurait pu être constitué d'un plateau comportant une articulation permettant au plateau de se briser suivant un axe transversal à l'axe longitudinal de l'engin.

Le châssis 1 est encore muni d'au moins un moyen 10 de rappel tendant à ramener constamment, à vide ou lors d'un soulagement du poids exercé sur l'assise du siège 5 par l'utilisateur, le châssis 1 en position haute. Ce moyen de rappel permet ainsi à l'utilisateur en position assise de franchir, au cours de l'avancement de l'engin, des obstacles, en particulier des obstacles de dénivellation du sol sans avoir à quitter son siège 5 et à se lever. Pour ce faire, il suffit simplement à l'utilisateur de prendre appui au sol à partir de ses bras, ce qui lui est facile du fait qu'il est assis à quelques centimètres du sol, et de délester le siège de son poids pour permettre le relevage automatique de l'assise du siège 5 et du châssis 1 en direction de la position haute. Pour permettre une adaptation à tout type d'individu, le moyen 10 de rappel présente de préférence un dispositif 19 de réglage de tension pour adapter le débattement des sections S1, S2 du châssis 1 en fonction du poids de l'individu. Il comporte par ailleurs un dispositif de réglage de sa longueur initiale pour permettre un réglage de la position basse du châssis.

Une réalisation particulière de ce moyen 10 de rappel est représentée aux figures 5 et 6. Dans ce cas, les sections S1, S2 de châssis 1 sont solidarisées entre elles par l'intermédiaire de deux bras 7, 8 de liaison. Le bras 8 est monté à pivotement sur une section S2 de châssis constituant la section arrière dudit châssis. Ce bras 8 est muni d'un ressort 10 coaxial au bras. Ce ressort 10 est comprimé axialement par l'autre bras 7 jusqu'à une position prédéterminée, de préférence réglable, lors du passage du châssis 1 de la position haute à la position basse. Ce ressort 10 rappelle lesdites sections S1, S2 de châssis 1 en position haute du châssis 1 à vide ou lors d'un soulagement du poids exercé sur l'assise du siège 5.

Le bras 8, monté à pivotement sur la section S2 arrière de châssis, est relié à cette dernière par un pivot représenté en 9 aux figures. Ce bras 8 comporte au moins une portion filetée pour permettre le positionnement d'un écrou 17 agissant simultanément sur le ressort 10 et sur un organe de fin de course 18 pour permettre un réglage de la hauteur du point bas du châssis 1 par rapport au sol en position basse de ce dernier. Un autre écrou 19, situé en partie haute du bras 8, constitue le dispositif de réglage de tension du ressort 10. Enfin, l'organe de fin de course 18 précité est positionné coaxial au bras 7 et à l'intérieur du ressort 10 de manière à servir de butée au bras 7 lors de la compression du ressort 10. Ainsi, lorsque le ressort 10 est comprimé par l'intermédiaire du bras 7 de liaison jusqu'à une position en butée du bras contre la butée 18, l'articulation 6 se trouve dans sa position basse extrême dont le choix a été prédéfini par l'utilisateur.

Comme le montrent les exemples de réalisation, le siège 5 est de préférence situé sur la section S1 de châssis 1 située en avant de l'articulation 6 pris dans le sens d'avancement de l'engin. En d'autres termes, le siège 5 est situé sur la section S1 avant du châssis 1 et au voisinage de l'articulation 6. En effet, comme l'articulation 6 correspond au point le plus bas du châssis 1 en position basse de ce dernier, il est important que le siège et l'assise de ce siège 5 puissent être au plus proche de ce point bas.

L'engin comporte encore, de manière en soi connue, un groupe motopropulseur 2 porté par la section S2 arrière du châssis 1. Ce groupe motopropulseur 2 est constitué d'une part d'un bloc batterie ou bloc alimentation 2A, d'autre part d'un ensemble motoréducteur 2B. Grâce à la position occupée par le groupe motopropulseur à l'arrière du châssis, le bloc d'alimentation 2A, tel que le bloc batterie, disposé en porte-à-faux à l'extrémité arrière de la section S2 arrière du châssis 1, constitue un contrepoids aidant au relèvement de l'assise du siège 5 du châssis 1, en particulier lors du franchissement d'un obstacle. En effet ,lorsque l'utilisateur en position assise soulage, par appui sur ses bras tendus, l'assise du siège 5 de son poids, le bloc alimentation 2A situé à l'arrière du châssis 1 tend également à faire bras de levier pour ramener le châssis en position haute en complément de l'action du ressort 10. Ainsi, tout contribue dans la conception de cet engin à permettre un passage aisé du châssis 1 de la position basse à la position haute, le passage de la position haute à la position basse s'effectuant quant à lui automatiquement sous l'action du poids de l'utilisateur sur l'assise.

La conception générale de l'engin, outre le châssis, peut être diverse et variée. Dans les exemples de réalisation représentés, l'une des sections, en l'occurrence la section avant S1 du châssis 1, est reliée à une fourche 12 logeant la roue avant 3 par l'intermédiaire d'une potence 13 de direction tandis que l'autre section S2, dite arrière de châssis 1, est reliée à un train de roues 4 arrière par l'intermédiaire d'un pont de transmission inclus dans le bloc motopropulseur 2. La fourche 12 est munie de repose-pieds 15 directionnels pour permettre d'une part l'orientation de la roue avant 3. Ces repose-pieds 15 sont par ailleurs à position variable en fonction de l'appui exercé par l'utilisateur sur ces derniers pour assurer la commande de l'avancement de l'engin. En effet, les repose-pieds 15 sont à enfoncement variable et assurent ainsi l'actionnement du groupe motopropulseur 2 situé à l'arrière de l'engin. De ce fait, la vitesse de l'engin est asservie à la position prise par le repose-pied lors d'un appui exercé par l'utilisateur.

Par ailleurs, pour faciliter au mieux la manoeuvre de l'engin dans les rangs de culture, le bras de potence 13 comporte au moins deux volets 14 rabattables munis d'encoches 14A pour enserrer les bras de la fourche 12 de manière à limiter l'orientation angulaire susceptible d'être prise par la roue avant 3 lorsque l'engin est positionné entre deux rangs de culture à travailler. L'effet de ces volets peut à tout moment être supprimé par simple relèvement de ces derniers. Dans ce cas, la roue peut pivoter au gré de l'utilisateur agissant sur les repose-pieds 15. Par ailleurs, le bras de potence 13 est relié à la section avant du châssis 1 par une liaison pivot 9 bloquée au moyen d'une goupille généralement goupillée en position de travail de l'engin. Cette liaison pivot 9 facilite le rangement de l'engin et permet d'embarquer ledit engin sur la plate-forme d'un véhicule de transport. Il suffit pour ce faire d'enlever la goupille et de ramener la potence 13, la fourche 14 et la roue avant 3 formant un ensemble monobloc le long de la section avant S1 du châssis.

Comme les travaux évoluent au gré des saisons, il est nécessaire de pouvoir utiliser cet engin à la fois dans une première position de travail correspondant à une position basse du châssis et dans une seconde position de travail correspondant à une position haute du châssis. Toutefois, la seule modification du positionnement du châssis ne saurait en soi suffire pour permettre à l'utilisateur d'occuper dans tous les cas une position ergonomique. En conséquence, le siège 5 est également déplaçable entre une première position de travail, dite d'ébourgeonnage, dans laquelle l'opérateur fait face à la route délimitée entre deux rangs de travail, ses pieds étant disposés de part et d'autre du rang et prenant appui sur les repose-pieds 15 directionnels positionnés de part et d'autre de la roue avant 3, et une seconde position de travail, dite de taille, dans laquelle le siège 5 fait face au rang à travailler. Dans cette seconde position de travail, dite de taille, le siège 5 est muni d'un certain nombre d'organes de réglage pour permettre notamment le réglage de la hauteur et du dévers de l'assise 5 du siège par rapport au châssis. Dans cette seconde position de travail, il est nécessaire que le châssis 1 soit maintenu en position haute. Pour ce faire, l'engin comporte un organe 11 de neutralisation de la mobilité de l'articulation 6 entre les deux sections S1, S2 de châssis 1. Cet organe 11 de neutralisation est représenté à la figure 6 sous forme d'une béquille escamotable qui, en position relevée, comme elle est montrée à la figure 6, empêche un déplacement relatif des bras de liaison 7, 8. Bien évidemment, d'autres organes de neutralisation auraient pu être envisagés.

Dans cette seconde position de travail, dans laquelle l'opérateur fait face au rang à travailler, le siège 5 est en outre mobile transversalement audit châssis 1 le long d'une glissière. Dans ce cas, l'avancement du véhicule est asservi à la position relative du siège le long de ladite glissière dans la mesure où l'utilisateur ne peut plus utiliser les repose-pieds 15 directionnels commandant en outre l'avancement du châssis. En conséquence, le groupe motopropulseur 2 de l'engin peut soit être commandé en fonctionnement par le déplacement du siège 5 le long de la glissière, soit par des contacteurs équipant les repose-pieds 15 directionnels.

Par ailleurs, pour les mêmes raisons que celles évoquées ci-dessus, dans la seconde position de travail dans laquelle l'opérateur fait face au rang à travailler, l'engin est muni d'un dispositif 16 d'orientation automatique de la roue avant. Dans les exemples représentés, ce dispositif 16 est constitué d'au moins un bras de manoeuvre prenant appui sur un rang à travailler. Ce dispositif d'orientation ne sera pas décrit plus en détail car il est bien connu à ceux versés dans cet art.

Grâce à la conception de l'engin tel que décrit ci-dessus, cet engin est adapté à l'ensemble des opérations d'entretien et de culture de la vigne. Il permet à l'utilisateur d'occuper plusieurs positions assises qui, à chaque fois, sont optimisées pour empêcher l'utilisateur d'avoir en particulier mal au dos. En effet, dans chaque position, l'utilisateur est installé confortablement dans son siège.

### LISTE DES REFERENCES

1 - châssis S1, S2
2 - groupe motopropulseur ; 2A batterie ; 2B motoréducteur
3 - roue avant
4- roue arrière
5 - siège
6 - articulation
7 - bras de liaison
8 - bras de liaison
9 - pivot
10 - ressort
11 - butée escamotable
12 - fourche
13 - bras de flèche = potence directionnelle
14 - volet
15 - pédale
16 - bras de manoeuvre
17 - butée réglage haute sol
18 - butée fin de course
19 - butée réglage

## Revendications

1. Engin automoteur notamment destiné à faciliter les opérations de traitement et d'entretien de cultures organisées en particulier en rangs telles que les vignes, du type comprenant, monté sur roues (3, 4), un châssis (1) portant un siège (5),
**caractérisé en ce que** ce châssis (1) est du type brisé pour pouvoir occuper au moins deux positions, l'une, dite basse, voisine du sol pour amener l'assise du siège (5) au ras du sol, l'autre, dite haute, éloignée du sol soit pour franchir un obstacle de dénivellation du sol, soit pour travailler à un niveau éloigné du sol, la position basse voisine du sol étant obtenue par le poids de l'utilisateur sur l'assise du siège (5), le soulagement de ce poids ramenant le châssis en position initiale haute.

2. Engin automoteur selon la revendication 1,
**caractérisé en ce que** le châssis (1) comporte au moins deux sections (S1, S2), dites respectivement avant et arrière, reliées entre elles par une articulation (6) disposée de préférence perpendiculairement à l'axe longitudinal de l'engin et au voisinage de l'assise du siège (5), lesdites sections (S1, S2) étant animées d'un mouvement relatif par rapport aux axes de roues (3, 4) respectivement avant et arrière pour se déplacer entre une position haute dans laquelle les sections (S1, S2) du châssis sont alignées et une position basse dans laquelle elles forment un angle α dièdre prédéterminé de préférence réglable.

3. Engin automoteur selon l'une des revendications 1 et 2,
**caractérisé en ce que** le châssis (1) est muni d'au moins un moyen (10) de rappel tendant à ramener constamment, à vide ou lors d'un soulagement du poids exercé sur l'assise du siège (5) par l'utilisateur, le châssis (1) en position haute.

4. Engin automoteur selon la revendication 3,
**caractérisé en ce que** le moyen (10) de rappel présente un dispositif (19) de réglage de tension pour adapter le débattement des sections (S1, S2) du châssis (1) en fonction du poids de l'individu.

5. Engin automoteur selon l'une des revendications 2 à 4,
**caractérisé en ce que** les sections (S1, S2) de châssis (1) sont solidarisées entre elles par l'intermédiaire de deux bras (7, 8) de liaison, l'un (8) des bras, monté à pivotement sur une section (S2) de châssis, étant muni d'un ressort (10) coaxial audit bras, ce ressort (10) étant comprimé axialement par l'autre bras (7) jusqu'à une position prédéterminée, de préférence réglable, lors du passage du châssis (1) de la position haute à la position basse, ce ressort (10) rappelant lesdites sections (S1, S2) de châssis (1) en position haute du châssis (1).

6. Engin automoteur selon l'une des revendications 2 à 5,
**caractérisé en ce que** le siège (5) est situé sur la section (S1) de châssis (1) située en avant de l'articulation (6) pris dans le sens d'avancement de l'engin.

7. Engin automoteur selon l'une des revendications 2 à 6,
**caractérisé en ce qu'**il comporte un organe (11) de neutralisation de la mobilité de l'articulation (6) entre les deux sections (S1, S2) de châssis (1).

8. Engin automoteur selon l'une des revendications 2 à 7,
**caractérisé en ce qu'**il comporte un bloc alimentation (2A), tel qu'un bloc batterie, disposé en porte-à-faux à l'extrémité arrière de la section (S2) arrière du châssis (1), ce bloc alimentation (2A) constituant un contrepoids aidant au relèvement de l'assise du siège (5) du châssis (1), en particulier pour le franchissement d'un obstacle.

9. Engin automoteur selon l'une des revendications 2 à 8,
**caractérisé en ce que** l'une (S1) des sections (S1, S2) de châssis (1) est reliée à une fourche (12) logeant la roue avant (3) par l'intermédiaire d'une potence (13) de direction tandis que l'autre section (S2), dite arrière de châssis (1), est reliée à un train de roues (4) arrière par l'intermédiaire d'un pont de transmission.

10. Engin automoteur selon la revendication 9,
**caractérisé en ce que** la fourche (12) est munie de repose-pieds (15) directionnels, ces repose-pieds (15) à position variable en fonction de l'appui exercé par l'utilisateur sur ces derniers assurant l'actionnement d'un groupe motopropulseur (2) situé à l'arrière de l'engin.

11. Engin automoteur selon la revendication 9,
**caractérisé en ce que** le bras de potence (13) comporte au moins deux volets (14) rabattables munis d'encoches (14A) pour enserrer les bras de la fourche (12) de manière à limiter l'orientation angulaire susceptible d'être prise par la roue avant (3).

12. Engin automoteur selon l'une des revendications 1 à 11,
**caractérisé en ce que** le siège (5) est déplaçable entre une première position de travail, dite d'ébourgeonnage, dans laquelle l'opérateur fait face à la route délimitée entre deux rangs de travail, ses pieds étant disposés de part et d'autre du rang et prenant appui sur des repose-pieds (15) directionnels positionnés de part et d'autre de la roue avant (3), et une seconde position de travail, dite de taille, dans laquelle le siège (5) fait face au rang à travailler.

13. Engin automoteur selon la revendication 12,
**caractérisé en ce que**, dans la position de travail dans laquelle l'opérateur fait face au rang à travailler, le siège (5) est mobile transversalement audit châssis (1) le long d'une glissière, l'avancement du véhicule étant asservi à la position relative du siège (5) le long de ladite glissière.

14. Engin automoteur selon l'une des revendications 12 et 13,
**caractérisé en ce que**, dans la position de travail dans laquelle l'opérateur fait face au rang à travailler, l'engin est muni d'un dispositif (16) d'orientation automatique de la roue avant, ce dispositif (16) étant constitué d'au moins un bras de manoeuvre prenant appui sur un rang à travailler.

15. Engin automoteur selon l'une des revendications 1 à 14,
**caractérisé en ce que** le châssis (1) est constitué d'au moins deux longerons reliés entre eux par une traverse, chaque longeron comportant une articulation (6) disposée perpendiculairement à l'axe longitudinal de l'engin, les sections de longeron, situées de part et d'autre de l'articulation (6), étant animées d'un mouvement relatif par rapport aux axes de roues (3, 4) respectivement avant et arrière pour pouvoir se déplacer entre une position haute, dans laquelle les sections de chaque longeron du châssis (1) sont alignées, et une position basse, dans laquelle elles forment un angle α dièdre prédéterminé de préférence réglable.
